(19) Europäisches Patentamt

European Patent Office

Office européen des brevets

(11) EP 0 435 557 B1

(12) EUROPEAN PATENT SPECIFICATION

(45) Date of publication and mention
of the grant of the patent:
**22.05.1996 Bulletin 1996/21**

(51) Int Cl.$^6$: **C08F 4/642**, C08F 10/00,
C08F 210/02

(21) Application number: **90313954.1**

(22) Date of filing: **19.12.1990**

(54) **Dimethylaluminum chloride-activated olefin polymerisation catalyst composition**

Durch Dimethylaluminiumchlorid aktivierter Olefinpolymerisationskatalysator

Composition catalytiques pour polymérisation d'oléfines activée pour le chlorure de diméthylaluminium

(84) Designated Contracting States:
**BE DE FR GB IT NL SE**

(30) Priority: **26.12.1989 US 456877**

(43) Date of publication of application:
**03.07.1991 Bulletin 1991/27**

(73) Proprietor: **MOBIL OIL CORPORATION
Fairfax, Virginia 22037-0001 (US)**

(72) Inventors:
• **Hagerty, Robert Olds
Metuchen, New Jersey 08840 (US)**
• **Husby, Per Kristian
Somerset, New Jersey 08873 (US)**
• **Kissin, Yuri Viktorovich
East Brunswick, New Jersey 08816 (US)**
• **Nowlin, Thomas Edward
Somerset, New Jersey 08873 (US)**

(74) Representative: **Colmer, Stephen Gary et al
European Office of Patent Counsel
Mobil House
500-600 Witan Gate
Central Milton Keynes
Buckinghamshire MK9 1ES (GB)**

(56) References cited:
**EP-A- 0 231 102          EP-A- 0 435 627**

• **MACROMOLECULES, vol. 15, no. 3, 1982, pp. 831-834, A. Zambelli "Isotactic polymerization of propene: Stereoregularity of the insertion of the first monomer unit as a fingerprint of catalytic active site"**

## Description

Reference is made to related application EP-A-435627.

The present invention relates to olefin polymerisation catalysts; to methods for producing such catalysts; and to methods of polymerising olefins particularly alpha-olefins, with such catalysts. More particularly, the present invention relates to olefin polymerisation catalysts which polymerise olefins to polymers having an improved distribution of branches among the polymer molecules.

It is known that olefin copolymers, for example, linear low density polyethylenes (LLDPE) which are polymers of ethylene with a minor amount of at least one $C_3$ to $C_{10}$ copolymerised olefin monomer, produced with prior art Ziegler-Natta catalysts, have a relatively broad distributuion of side branches. When LLDPEs are subjected to fractionation, different fractions have widely different levels of branching, indicating that different fractions of the copolymers have different compositions, i.e., they contain varying amounts of ethylene and higher comonomers. U.S. Patent 3,645,992 discloses that a more uniform distribution of branches is beneficial to the mechanical properties of LLDPE. A more uniform distribution of branches among individual molecules of a copolymer gives higher dart impact strength and lower hexane extractables. The higher dart impact strength gives improved mechanical toughness to a film product prepared from the copolymer, and the lower extractables reduce film blockiness (self-cling of polymer film) and allow the film to meet FDA requirements for extractables in films used for food packaging. It is therefore desirable to produce copolymers with improved, more narrow branching distributions.

EP-A-0231102 discloses a catalyst composition for polymerizing alpha-olefins, which is prepared by reacting a transition metal compound (e.g. titanium) with a trimethylaluminum catalyst activator.

This invention seeks to provide a catalyst for the polymerisation of olefins, e.g., alpha-olefins, capable of producing polymers, particularly LLDPE, having a substantially improved distribution of branches among the polymer molecules.

In accordance with one aspect of this invention, there is provided an olefin polymerisation catalyst composition prepared by:

(A) contacting a solution of a magnesium compound, for example $MgCl_2$, in an electron donor compound with a titanium compound;
(B) contacting the solution resulting from step (A) with a solid, inert porous carrier to form a catalyst precursor; and,
(C) contacting the precursor with dimethylaluminum chloride (DMAC).

The invention is also directed to an olefin, particularly alpha-olefin, polymerisation process conducted in the presence of the catalyst composition of this invention.

It has unexpectedly been found that the use of DMAC as the activator for the precursor composition instead of triethylaluminum (TEAL), commonly used as the preferred catalyst activator, produces improved catalyst compositions which, when used in alpha-olefin polymerisation reactions, produce linear low density polyethylene polymer resins (LLDPE) having substantially more uniform distribution of side chain branches among the polymer molecules than similar resins produced with the same catalyst precursors activated with TEAL.

LLDPEs prepared in the presence of the catalyst of this invention have values of melt flow ratio (MFR) of 26 to 28, evidencing a relatively more narrow molecular weight distribution (MWD) than similar polymers prepared in the presence of the same catalyst precursor compositions but activated with TEAL.

Thus, the polymers prepared with the catalysts of this invention are especially suitable for the production of film and injection molding products.

The manner of combining the DMAC activator with the catalyst precursor is not critical to the present invention. Thus, DMAC may be combined with the catalyst precursor either outside the reactor vessel, prior to the polymerisation reaction, or it can be introduced into the reactor vessel substantially simultaneously with the catalyst precursor.

The precursor composition may be formed by dissolving at least one titanium compound and at least one magnesium compound in at least one electron donor compound at a temperature from 20°C to the boiling point of the electron donor compound. The titanium compound(s) may be added to the electron donor compound(s) before or after the addition of the magnesium compound(s), or concurrently therewith. The dissolution of the titanium compound(s) and the magnesium compound(s) may be facilitated by stirring, and in some instances by refluxing, these two compounds in the electron donor compound(s). After the titanium compound(s) and the magnesium compound(s) are dissolved, the precursor composition may be separated by crystallisation or by precipitation, for example, with an aliphatic or aromatic hydrocarbon containing from 5 to 8 carbon atoms, such as hexane, isopentane or benzene, as fine, free-flowing particles having an average particle size from 10 microns (1 micron = 1 μm) to 100 microns after drying at temperatures up to 60°C.

From 0.5 mol to 56 mols, and preferably from 1 mol to 10 mols, of the magnesium compound(s) may be used per mol of the titanium compound(s) in preparing the precursor composition.

The titanium compound(s) employed in preparing the precursor composition preferably have the formula:

$$Ti(OR)_a X_b$$

wherein:

R represents an aliphatic or aromatic hydrocarbyl group containing from 1 to 14 carbon atoms, or COR' where R' is an aliphatic or aromatic hydrocarbyl group containing from 1 to 14 carbon atoms,

X represents a Cl, Br or I atom or a mixture thereof,

a represents 0, 1 or 2;

b represents 1 to 4; and

a + b = 3 or 4.

Suitable titanium compounds include $TiCl_3$, $TiCl_4$, $Ti(OCCH_3)Cl_3$, $Ti(OC_6H_5)Cl_3$, $Ti(OCOCH_3)Cl_3$ and $Ti(OCOC_6H_5)Cl_3$, preferably $TiCl_3$ or $TiCl_4$. $TiCl_3$ is the most preferred titanium compound.

The magnesium compound(s) employed in preparing the precursor composition preferably have the formula:

$$MgX_2$$

wherein:

X represents a Cl, Br or I atom or a mixture thereof.

Suitable magnesium compounds include $Mgcl_2$, $MgBr_2$ and $MgI_2$. Anhydrous $MgCl_2$ is particularly preferred.

The electron donor compound(s) employed in preparing the precursor composition may be an organic compound which is liquid at 25°C and in which the titanium and magnesium compounds are soluble. The electron donor compounds are known as such, or as Lewis bases.

Suitable electron donor compounds include the alkyl esters of aliphatic and aromatic carboxylic acids, aliphatic ethers, cyclic ethers and aliphatic ketones, especially aliphatic ethers and cyclic ethers. The preferred electron donor compounds are alkyl esters of saturated aliphatic carboxylic acids containing from 1 to 4 carbon atoms; alkyl esters of aromatic carboxylic acids containing from 7 to 8 carbon atoms; aliphatic ethers containing from 2 to 8 carbon atoms; preferably from 4 to 5 carbon atoms; cyclic ethers containing from 4 to 5 carbon atoms; preferably mono or di-ethers containing 4 carbon atoms; and aliphatic ketones containing from 3 to 5 carbon atoms, preferably from 3 to 4 carbon atoms. The most preferred of these elctron donor compounds include methyl formate, ethyl acetate, butyl acetate, ethyl ether, tetrahydrofuran, dioxan, acetone and methyl ethyl ketone, especially tetrahydrofuran.

After the precursor composition has been prepared it is diluted with an inert carrier material by (1) mechanically mixing or (2) impregnating the precursor composition into the carrier material. Mechanical mixing of the inert carrier and the precursor composition is effected by blending these materials together using conventional techniques. The blended mixture suitably contains from 3 percent by weight to 50 percent by weight of the precursor composition. Impregnation of the inert carrier material with the precursor composition may be accomplished by dissolving the precursor composition in the electron donor compound, and then admixing the support. The solvent is then removed by drying at temperatures up to about 85°C. The inert carrier may also be impregnated with the pecursor composition by adding the inert carrier to a solution of the materials used to form the precursor composition in the electron donor compound, without isolating the precursor composition from said solution. The excess electron donor compound is then removed by drying at temperatures up to about 85°C.

When made as discussed above, the blended or impregnated precursor composition has the formula:

$$Mg_m Ti(OR)_n X_p [ED]_q$$

wherein:

R represents an aliphatic or aromatic hydrocarbyl group containing from 1 to 14 carbon atoms, or COR' where R' is an aliphatic or aromatic hydrocarbyl group containing from 1 to 14 carbon atoms;

X represents a Cl, Br or I atom or a mixture thereof;

ED represents an electron donor compoud;

m represents 0.5 to 56, preferably 1.5 to 5;

n represents 0, 1 or 2;

p represents 2 to 116, preferably 6 to 14; and

q represents 2 to 85, preferably 3 to 10.

Suitably, the impregnated carrier material contains from 3 percent by weight to 50 percent by weight, preferably from 10 percent by weight to 30 percent by weight, of the precursor composition.

The carrier materials employed to dilute the precursor composition are solid, particulate, porous materials which are inert to the other components of the catalyst composition, and to the other active components of the reaction system. These carrier materials include inorganic materials, such as oxides of silicon and/or aluminum. The carrier materials may be used in the form of dry powders having an average particle size from 10 microns to 250 microns, preferably from 20 microns to 150 microns. These materials are also porous and may have a surface area of at least 3 square meters per gram, and preferably at least 50 square meters per gram. Catalyst activity or productivity can apparently be improved by employing a silica support having average pore sizes of at least 80 Angstrom units (1 Angstrom unit = $10^{-1}$ nm), preferably at least 100 Angstrom units. The carrier material should be dry, that is, free of absorbed water. Drying of the carrier material can be effected by heating, for example, at a temperature of at least 600°C when silica is employed as the support. Alternatively, when silica is employed, it may be dried at a temperature of at least 200°C and treated with 1 weight percent to 8 weight percent of one or more of aluminum activator described below. Modification of the support with an aluminum compound in this manner provides the catalyst composition with increased activity and also improves polymer particle morphology of the resulting ethylene copolymers. Other organometallic compounds, such as diethylzinc, may also be used to modify the support.

The aluminum activator compounds which may be used to treat the silica are organoaluminum compounds and may have the formula:

$$Al(R'')_D X'_e H_f$$

wherein:

X' represents a Cl atom or an OR''' group; R'' and R''', which may be the same or different, each represent a saturated hydrocarbyl group containing from 1 to 14 carbon atoms.

e represents 0 to 1.5;

f represents 0 or 1; and

d + e + f = 3.

Such compounds may be employed individually or in combination and are exemplified by $Al(C_2H_5)_3$, $Al(C_2H_5)_3Cl$, $Al_2(C_2H_5)_3Cl_3$, $Al(C_2H_5)_2H$, $Al(C_2H_5)_2(OC_2H_5)$, $Al(i-C_4H_9)_3$, $Al(i-C_4H_9)_2H$, $Al(C_6H_{13})_3$ and $Al(C_8H_{17})_3$.

If desired, the precursor composition may be partially activated before it is introduced into the polymerisation reactor. However, any activation undertaken outside of the polymerisation reactor should preferably be limited to the addition of an amount of the activator compound which does not raise the molar ratio of the activator compound: electron donor in the precursor composition beyond 1.4:1. The compounds used partially to activate the precursor composition preferably are the organoaluminum compounds of formula (1), defined above. Preferably, when the partial activation is effected outside the reactor in this manner, the activator compound is employed in an amount which will provide the precursor composition with an activator compound: electron donor molar ratio from 0.1:1 to 1:1. Such partial activation is carried out in a hydrocarbon solvent slurry, followed by drying the resulting mixture, to remove the solvent, at temperatures from 20°C to 80°C, preferably from 50°C to 70°C. The resulting product is a free-flowing solid paticulate material which can be readily fed to the polymerisation reactor where the activation is completed with DMAC.

If the catalyst precursor is partially activated outside of the polymerisation reactor, tri-n-hexyl aluminum or diethyl aluminum chloride are preferably used as pre-reducing agents partially to activate it. The amount of the pre-reducing agent may be adjusted as described in European Patent Application 0 120 503 to obtain a favourable balance of catalyst productivity and settled bulk density of the resin. The pre-reduced precursor is then activated either outside of the reactor vessel or inside the vessel with the dimethylaluminum chloride catalyst activator.

The DMAC activator is employed in an amount which is at least effective to promote the polymerisation activity of the solid component of the catalyst of this invention. Preferably, the DMAC activator is used in such amounts that the concentration thereof in the polymer product is 50 to 500 parts per million (ppm), preferably it is 100 to 400 ppm, and most preferably 200 to 300 ppm. In slurry polymerisation processes, a portion of the DMAC activator can be employed to pretreat the polymerisation medium if desired.

The catalyst may be activated in situ by adding the activator and the catalyst precursor (either unactivated or partially activated) separately to the polymerisation medium. It is also possible to combine the catalyst precursor and the activator before the introduction thereof into the polymerisation medium, e.g., for up to about 2 hours prior to the introduction thereof into the polymerisation medium, at a temperature from -40 to 100°C.

A suitable activating amount of the activator may be used to promote the polymerisation activity of the catalyst. The aforementioned proportions of the activator can also be expressed in terms of the number of moles of the activator per gram atom of titanium in the catalyst composition, for example from 5 to 300, preferably 20 to 200 moles of the activator per gram atoms of titanium.

Olefins, particularly alpha-olefins, are polymerised with the catalysts prepared according to the present invention by any suitable process. Such processes include polymerisation carried out in suspension, in solution or in the gas phase. Gas phase polymerisations are preferred, for example, those taking place in stirred bed reactors and, especially, fluidised bed reactors.

The molecular weight of the polymer may be controlled in a know manner, e.g., by using hydrogen. With the catalysts produced according to the present invention, molecular weight may be suitably controlled with hydrogen when the polymerisation is carried out at relatively low temperatures, for example, from 70 to 105°C. The molecular weight control is evidence by a measurable increase in melt index ($I_2$) of the polymer when the molar ratio of hydrogen to ethylene in the reactor is increased.

The molecular weight distribution of the polymers prepared in the presence of the catalysts of the present invention, as expressed by MFR values, varies from 26 to 28 for LLDPE products having a density from 0.92 to 0.91 gms/cc (1 gm = 1 g ; 1cc = 1 cm$^3$), and an $I_2$ melt index from 0.3 to 1.3. Such MFR values are indicative of a relatively narrow molecular weight distribution, thereby rendering the polymers especially suitable for low density film applications since the products exhibit less molecular orientation in high-speed film blowing processes, and therefore have greater film strength.

The physical properties of the films made from the resins polymerised with the catalysts of this invention are also better than those of the resins polymerised with the TEAL- and TIBA- activated catalyst precursors.

The productivity of the catalysts prepared according to the present invention is at least 200, and can be as much as 450, grams of polymer per gram of catalyst precursor per 100 psi (1 psi = 6.9 kPa) of ethylene partial pressure.

The polyethylene polymers prepared in accordance with the present invention may be homopolymers of ethylene or copolymers of ethylene with one or more $C_3$-$C_{10}$ alpha-olefins. Thus, copolymers having two monomeric units are possible as well as terpolymers having three monomeric units. Particular examples of such polymers include ethylene/propylene copolymers, ethylene/l-butene copolymers, ethylene/l-hexene copolymers, ethylene/4-methyl-l-pentene copolymers, ethylene/l-butene/l-hexene terpolymers, ethylene/proylene/l-hexene terpolymers and ethylene/propylene/l-butene terpolymers. When propylene is employed as a comonomer, significantly higher amounts of the comonomer (the propylene) are required to produce an ethylene/propylene resin having the required density for a particular application as compared to the amounts of $C_4{=}$ or higher alpha-olefins having the same density. Accordingly, ethylene/propylene copolymers are possible, by not preferred. The most preferred polymers are copolymers of ethylene and l-hexene.

The linear low density polyethylene polymers produced in accordance with the present invention preferably contain at least 80 percent by weight of ethylene units.

A particularly desirable method producing linear low density polyethylene polymers according to the present invention is in a fluid bed reactor. Such a reactor and means for operating the same are described in U.S. Patent No. 4,011,382; 4,302,566; and 4,481,301.

The following Examples illustrate the invention.

The properties of the polymers produced in the Examples were determined by the following test methods:

| | |
|---|---|
| Density | ASTM D-1505 - A plaque is made and conditioned for one hour at 100°C to approach equilibrium crystallinity. Measurement for density is then made in a density gradient column; reported as gms/cc. |
| Melt Index (MI), $I_2$ | ASTM D-1238- Condition E-Measured at 190°C - reported as grams per 10 minutes. |
| High Load Melt Index (HLMI), $I_{21}$ | ASTM D-1238 - Condition F-Measured at 10.5 times the weight used in the melt index test above. |

$$\text{Melt Flow Ratio (MFR)} = \frac{I_{21}}{I_2}$$

| | |
|---|---|
| Crystalline Melting Point ($T_m$) | Melting points of copolymers were measured by the Differential Scanning |

| | |
|---|---|
| | Calorimetry (DSC) method, at a heating rate of 2°C/min. Polymer samples were preliminarily crystallized and annealed by heating them to 150°C and cooling to 40°C at a rate of 0.5°C/min. |
| Crystallinity | Crystallinity of ethylene copolymers was measured by the Differential Scanning Calorimetry (DSC) method, from the areas under the melting curves. The heat of melting for 100% crystalline polyethylene was chosen as 283 Joule/g. |
| Comonomer Content | Comonomer contents of ethylene copolymers were measured by the infrared spectroscopic method, as described in the article of T. E. Nowlin, Y. V. Kissin and K. P. Wagner HIGH ACTIVITY ZIEGLER-NATTA CATALYST FOR THE PREPARATION OF ETHYLENE COPOLYMERS, Journal of Polymer Science: Part A: Polymer Chemistry, Volume 26, pages 755-764 (1988). |
| n-hexane Extractables | (FDA test used for polyethylene film intended for food contact applications). A 200 square inch (0.13 $m^2$) sample of 1.5 mil (0.038 mm) gauge film is cut into strips measuring 1" x 6" (2.5 x 15 cm) and weighed to the nearest 0.1 mg. The strips are placed in a |
| n-hexane Extractables (cont) | vessel and extracted with 300 ml of n-hexane at 50± °C for 2 hours. the extract is then decanted into tared culture dishes. After drying the extract in a vacuum dessicator the culture dish is weighed to the nearest 0.1 mg. The extractables, normalized with respect to the original sample weight, is then reported as the weight fraction of n-hexane extractables. |
| Dart Impact | ASTM D1709 Free Falling DART Method (F50) |

## EXAMPLE 1

### (Catalyst Precursor Synthesis)

A catalyst precursor was synthesized as disclosed in European Patent Application 0 120 503.

### (a) Impregnation of Support with Precursor

In a 12 liter flask equipped with a mechanical stirrer were placed 41.8g (0.439 mol) of anhydrous $MgCl_2$ and 2.5 liters of tetrahydrofuran (THF). To this mixture, 29.0 (0.146 mol) of $TiCl_3$ and 0.33 $AlCl_3$ were added dropwise over a 1/2 hour period. The mixture was then heated at 60°C for another 1/2 hour in order to completely dissolve the material.

Five hundred grams (500 g) of silica were dehydrated by heating at a temperature of 600°C and slurried in 3 liters of isopentane. The slurry was stirred while 186 ml of a 20 percent by weight solution of triethylaluminum in hexane was added thereto over a 1/4 hour period. The resulting mixture was then dried under a nitrogen purge at 60°C over a period of about 4 hours to provide a dry, free-flowing powder containing 5.5 percent by weight of the aluminum alkyl.

The treated silica was then added to the solution prepared as above. The resulting slurry was stirred for 1/4 hour and then dried under a nitrogen purge at 60°C over a period of about 4 hours to provide a dry, impregnated, free-flowing powder.

### (b) Preparation of Partially Activated Precursor

(i) The silica-impregnated precursor composition prepared in accordance with Example 1(a) was slurried in 3 liters of anhydrous isopentane and stirred while a 20 percent by weight solution of diethylaluminum chloride in anhydrous hexane was added thereto over a 1/4 hour period. The diethylaluminum chloride (DEAC) solution was employed in an amount sufficient to provide 0.4 mols of this compound per mol of tetrahydrofuran (THF) in the precursor. After addition of the diethylaluminum chloride was completed, stirring was continued for an additional 1/4 to 1/2 hour while a 20 percent by weight solution of tri-n-hexylaluminum (TNHAL) in anhydrous hexene was added in an amount sufficient to provide 0.2 mols of this compound per mol of tetrahydrofuran in the precursor. The mixture was then dried under a nitrogen purge at a temperature of 65±10°C over a period of about 4 hours to provide a dry, free-flowing powder. This material was stored under dry nitrogen until it was needed.

Two alternative procedures (ii) and (iii) for partially activating the precursor may be employed.

(ii) The silica-impregnated precursor composition prepared in accordance with Example 1(a) is partially activated with diethylaluminum chloride and tri-n-hexylaluminum employing the same procedure as in 1(b)(i) except that the tri-<u>n</u>-hexylaluminum is employed in an amount sufficient to provide 0.4 mols of this compound per mol of tetrahydrofuran in the precursor.

(iii) The silica-impregnated precursor composition prepared in accordance with Example 1(a) is partially activated with diethylaluminum chloride and tri-<u>n</u>-hexylaluminum employing the same procedure as in 1(b)(i) except that each compound is employed in an amount sufficient to provide 0.3 mols of such compound per mol of tetrahydrofuran in the precursor.

### EXAMPLES 2 to 6

<u>(Preparation of LLDPE Product With TEAL and DMAC--Activated Precursors of Example 1)</u>

The catalyst precursor of Example 1 was combined with triethylaluminum (TEAL) or with dimethylaluminum (DMAC) catalyst activators to produce ethylene/1-hexene copolymers. The catalyst precursor was partialy activated as in Example 1(b)(i) with molar ratios of DEAC/THF = 0.4, and TNHAL/THF = 0.2. A typical polymerization was carried out as examplified herein for Example 5. At about 25°C, and under a slow nitrogen purge, a 3.8 liter stainless steel autoclave, previously heated to about 95°C under a purge of dry nitrogen, was filled with 1200 mls of dry hexane, 800 mls of dry 1-hexene and 2 mls of DMAC (25 wt% in hexane). The reactor was closed, and hydrogen was introduced to raise the internal pressure to 22 psi (150 kPa). The contents of the reactor were stirred at 900 rpm and the temperature was increased to about 75°C.

The reactor was filled with ethylene to a total pressure of about 125 psi and then 1.004 grams of Example 1(b)(i) catalyst precursor, slurried in about 10 mls of hexane, was added to the reactor. The reactor temperature was adjusted to 80°C and the reactor pressure was maintained with ethylene.

The polymerization was continued for 180 minutes. 304 grams of polyethylene were obtained. The polymer contained 2.6 mole % of 1-hexene and it had the following properties: $I_2$= 0.29; $I_{21}$= 8.17; $I_{21}/I_2$ = 28.2; density = 0.918 gm/cc. The results of Examples 2-6 are also summarized in Table 1.

Table 1

| Example | Cocat. | Hexene content (mol.%) | Cryst % (DSC*) | Melting Point, $T_m$ (C°) (DSC*) | Density (g/cc) | $I_2$ (g/10 min) |
|---|---|---|---|---|---|---|
| 2 | TMA | 3.4 | 34.5 | 124.7 | 0.918 | 0.88 |
| 3 | TEAL | 2.5 | 41.0 | 126.0 | 0.925 | 0.85 |
| 4 | TEAL | 4.2 | 26.2 | 125.5 | 0.914 | 1.06 |
| 5 | MAC | 2.6 | 24.8 | 123.6 | 0.918 | 0.29 |
| 6 | DMAC | 4.3 | 18.8 | 123.6 | 0.911 | 0.35 |

*measured for annealed resins

The data of Table 1 indicates that melting points of the polymers made with DMAC-activated catalyst precursor are depressed, as compared to the polymers made with the same precursor activated with trimethylaluminum (TMA) or triethylaluminum (TEAL).

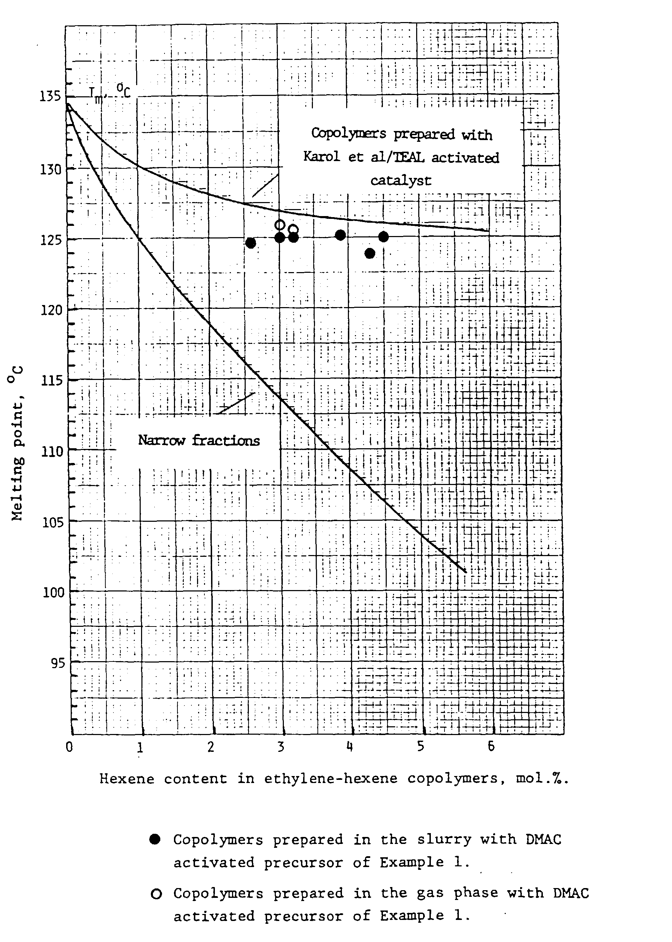

The data of Table 1 is also illustrated graphically in the Figure, which is a plot of melting points of several ethylene/1-hexene copolymers prepared with the DMAC-activated catalyst as a function of their molar hexene contents.

The upper curve of the Figure gives crystalline melting points of the resins produced with a catalyst of European Patent Application, 0 120 503, Example 1(b), partially activated in accordance with Examples 2(b) or 2(c) activated with TEAL in the polymerization process. The polymers of the upper curve have a relatively broad distribution side branches, as indicated by relatively small changes in the melting points with the change in the 1-hexene content. The lower curve gives melting points of narrow copolymer fractions of these polymers which have very narrow compositional distributions (i.e., substantially homogeneous branching distributions), as indicated by a rapid decrease of the melting points with increased content of 1-hexene of the copolymer fractions of the lower curve. The fractionation was performed with the preparative TREF procedure (temperature-raising elution fractionation). According to the teaching of U.S. 3,645,992, the branching distribution of any copolymer can be characterized by measuring its crystalline melting point and its comonomer content. Therefore, a melting point depression for a copolymer with a particular composition, such as that shown by the individual data points in the Figure for the copolymers made with the catalyst of this invention (activated with DMAC), indicates better compositional homogeneity of such copolymers as compared to the copolymers of the upper curve.

EXAMPLE 7

(Gas-Phase Reaction With TMA-Activated Precursor of Example 1)

The catalyst precursor composition of Example 1(a), which was not partially activated prior to the introduction into the reactor, was used to prepare a linear low density polyethylene product (LLDPE) in a gas-phase, fluidized bed reactor operated substantially in the manner disclosed by Nowlin et al, U.S. Patent 4,481,301. The reactor was 0.45 meters in diameter and it was capable of producing up to 25 kgs/hr of resin. A steady-state reaction was obtained by continuously feeding catalyst precursor, TMA activator, and reactant gases (ethylene, 1-hexene and hydrogen) to the reactor while also continuously withdrawing polymer product from the reactor. The feed rate of ethylene was maintained at a constant 14.4 kgs/hr, and the feed rate of catalyst precursor was adjusted to achieve a substantially equal rate of polymer production. The feed rate of TMA was 1.33 grams/hr, equivalent to a 92.5 ppm feed ratio of TMA to ethylene. Reaction temperature was 87°C, and the fluid bed residence time (mass of the polymer bed in the reactor divided by production rate) was approximately 3.7 hours. Other reaction conditions, including the gas phase composition of the reactor, are given in Table 2.

Catalyst productivity was determined by dividing the polymer production rate by the precursor feed rate. A value of 3840 grams of polymer per gram of catalyst precursor was thereby obtained (Table 2). The polymer product was evaluated in a conventional manner, and the results are summarized in Table 3.

EXAMPLE 8

Gas-Phase Reaction With DMAC-Activated Precursor)

Another LLDPE polymer was produced with the catalyst precursor of Example 1(a), which was not partially activated prior to the introduction into the reactor, using substantially the same reaction conditions as in Example 7, except that DMAC was used as the activator in the place of TMA, and the gas phase molar ratio of hydrogen to ethylene was increased to 0.245 to obtain a polymer product of substantially the same melt index as in Example 7 to enable a direct comparison of polymer properties. The DMAC to ethylene feed ratio was 181 ppm. Other reaction conditions are summarized in Table 2, and the product properties are summarized in Table 3.

EXAMPLE 9

(Gas-Phase Reaction With DMAC-Activated Precusor)

Another LLDPE polymer was produced with the catalyst precursor of Example 1(a), which was not partially activated prior to the introduction into the reactor, using substantially the same reaction conditions as in Example 8, except that a lower feed ratio of DMAC was used, 142 ppm, and the gas phase molar ratio of hydrogen to ethylene was increased to 0.368 to obtain a polymer product of substantially the same melt index as in Examples 7 and 8 to enable a direct comparison of polymer properties. Other reaction conditions are summarized in Table 2, and the product properties are summarized in Table 3.

Table 2

| (Gas-Phase Reaction Conditions) | | | | | | |
|---|---|---|---|---|---|---|
| | Activator | Activator Feed Ratio | $P_{C2}=$ | $1\text{-}C_6=/C_2=$ | $H_2/C_2=$ | Productivity |
| Ex. No | Type | (ppm) | (psi) | (moles/mole) | (moles/mole) | (gms/gm) |
| 7 | TMA | 93 | 98.0 | 0.177 | 0.137 | 3840 |
| 8 | DMAC | 181 | 105 | 0.170 | 0.245 | 2790 |
| 9 | DMAC | 142 | 103 | 0.182 | 0.368 | 1600 |

Table 3

| (Resin Properties) | | | | | |
|---|---|---|---|---|---|
| Ex. No | Density (gm/cc) | $I_{21}$ (gms/10 min) | MFR | N-hexane Extract (wt %) | Dart Impact Strength (gms) |
| 7 | 0.918 | 0.96 | 28.4 | 3.94 | 264 |
| 8 | 0.917 | 0.77 | 28.1 | 2.47 | 462 |
| 9 | 0.918 | 0.94 | 27.2 | 2.57 | 387 |

Discussion of Examples 7 to 9

The DMAC-activated precursor of Examples 8 and 9 produced a polymer product of a substantially increased dart impact strength and reduced n-hexane extractables compared to the polymer produced with the TMA-activated precursor of Example 7. The dart impact strength was increased by 47 to 75 percent and the n-hexane extractables were reduced by 35 to 37 percent (Table 3). As indicated by Elston, U.S. Patent 3,645,992, improvements in these properties are the result of a more homogeneous distribution of short-chain branches.

The resin melt flow ratio (MFR) was equivalent for both activator types (Table 3), indicating that the molecular weight distribution was not substantially affected by the change from TMA to DMAC. Catalyst productivity was, however, reduced with DMAC. Productivity of the DMAC-activated precursor of Example 8 was reduced by 27 percent in comparison to the TMA-activated precursor of Example 7 (Table 2). A greater loss in productivity, 58 percent, was observed at the lower DMAC feed ratio used in Example 9.

The figure is a graphical representation of the relationship of crystalline melting point as a function of I-hexene content for:

1) polymers made with catalyst of European Patent Application 0 120 503 (upper curve);
2) polymer fractions of narrow branching distribution (lower curve); and
3) polymers made with Example 1 precursor activated with DMAC (individual data points)

**Claims**

1. An olefin polymerisation catalyst composition prepared by:

   (a) contacting a solution of a magnesium compound in an electron donor compound with a titanium compound;
   (b) contacting the solution resulting from step (A) with a solid, inert porous carrier to form a catalyst precursor; and,
   (c) contacting the precursor with dimethylaluminum chloride.

2. A catalyst composition according to claim 1 wherein the magnesium compound has the formula:

$$MgX_2$$

   wherein:
   X represents a Cl, Br or I atom or a mixture thereof.

3. A catalyst composition according to claim 1 or 2 wherein the electron donor compound comprises at least one Lewis base.

4. A catalyst composition according to claim 3 wherein the Lewis base comprises an aliphatic ether and/or a cyclic ether.

5. A catalyst composition according to any preceding claim wherein the titanium compound has the formula:

$$Ti(OR)_a X_b$$

   wherein:

   R represents an aliphatic or aromatic hydrocarbyl group containing 1 to 14 carbon atoms or COR' where R' is an aliphatic or aromatic hydrocarbyl group containing from 1 to 14 carbon atoms;

X represents a Cl, Br or I atom or a mixture thereof.

a represents 0, 1 or 2,

b represents 1 to 4, and

a + b = 3 or 4.

6. A catalyst composition according to claim 5 wherein the titanium compound is $TiCl_3$, $TiCl_4$, $Ti(OCH_3)Cl_3$, $Ti(OC_6H_5)Cl_3$, $Ti(OCOCH_3)Cl_3$ or $Ti(OCOC_6H_5)Cl_3$.

7. A catalyst composition according to any preceding claim composition has the formula:

$$Mg_m Ti(OR)_n X_p [ED]_q$$

wherein:

R represents an aliphatic or aromatic hydrocarbyl group containing from 1 to 14 carbon atoms or COR' wherein R' represents an aliphatic or aromatic hydrocarbyl group containing from 1 to 14 carbon atoms;

X represents a Cl, Br or I atom or a mixture thereof.

ED represents a electron donor compound;

m represents 0.5 to 56;

n represents 0,1 or 2;

p represents 2 to 116; and

q represents 2 to 85.

8. A catalyst composition according to claim 7 wherein m represents 1.5 to 5, p represents 6 to 14 and q represents 3 to 10.

9. A catalyst composition according to any preceding claim wherein, after said step (A), but before said step (C), there is conducted the following step:
    (Bl) partially activating the catalyst precursor with diethylaluminum chloride and tri-n-hexylaluminum.

10. An olefin polymerisation process comprising polymerising at least one $C_2$ to $C_{10}$ alpha-olefin under olefin polymerisation conditions in the presence of a catalyst composition prepared by:

    (A) contacting a solution of a magnesium compound in an electron donor compound with a titanium compound;
    (B) contacting the solution resulting from step (A) with a solid, inert porous carrier to form a catalyst precursor; and,
    (C) contacting the precursor with dimethylaluminum chloride.

11. A process according to claim 10 wherein the alpha-olefin feed is a mixture of ethylene and at least on $C_3$ to $C_{10}$ alpha olefin.

**Patentansprüche**

1. Katalysatorzusammensetzung zur Olefinpolymerisation, hergestellt durch

    (A) Kontaktieren einer Lösung einer Magnesiumverbindung in einer Elektronendonorverbindung mit einer Titanverbindung,

    (B) Kontaktieren der aus der Stufe (A) resultierenden Lösung mit einem festen inerten porösen Träger zur Bildung eines Katalysatorvorläufers und

(C) Kontaktieren des Vorläufers mit Dimethylaluminiumchlorid.

2. Katalysatorzusammensetzung nach Anspruch 1, worin die Magnesiumverbindung die Formel

$$MgX_2$$

aufweist, in der X ein Chlor-, Brom- oder Iodatom oder ein Gemisch hiervon bedeutet.

3. Katalysatorzusammensetzung nach Anspruch 1 oder 2, worin die Elektronendonorverbindung mindestens eine Lewis-Base enthält.

4. Katalysatorzusammensetzung nach Anspruch 3, worin die Lewis-Base einen aliphatischen Ether und/oder einen cyclischen Ether enthält.

5. Katalysatorzusammensetzung nach einem der vorstehenden Ansprüche, worin die Titanverbindung die Formel

$$Ti(OR)_a X_b$$

aufweist, in der

R einen aliphatischen oder aromatischen Kohlenwasserstoffrest mit 1 bis 14 Kohlenstoffatomen oder den Rest COR', worin R' einen aliphatischen oder aromatischen Kohlenwasserstoffrest mit 1 bis 14 Kohlenstoffatomen darstellt,

X ein Chlor-, Brom- oder Iodatom oder ein Gemisch hiervon,

a die Zahl 0, 1 oder 2,

b eine Zahl von 1 bis 4 und

a + b die Zahl 3 oder 4

bedeuten.

6. Katalysatorzusammensetzung nach Anspruch 5, worin die Titanverbindung $TiCl_3$, $TiCl_4$, $Ti(OCH_3)Cl_3$, $Ti(OC_6H_5)Cl_3$, $Ti(OCOCH_3)Cl_3$ oder $Ti(OCOC_6H_5)Cl_3$ ist.

7. Katalysatorzusammensetzung nach einem der vorstehenden Ansprüche, worin die Zusammensetzung des Vorläufers der Formel

$$Mg_m Ti(OR)_n X_p [ED]_q$$

entspricht, worin

R einen aliphatischen oder aromatischen Kohlenwasserstoffrest mit 1 bis 14 Kohlenstoffatomen oder den Rest COR', worin R' einen aliphatischen oder aromatischen Kohlenwasserstoffrest mit 1 bis 14 Kohlenstoffatomen darstellt,

X ein Chlor-, Brom- oder Iodatom oder ein Gemisch hiervon,

ED eine Elektronendonorverbindung,

m eine Zahl von 0,5 bis 56,

n die Zahl 0, 1 oder 2,

p eine Zahl von 2 bis 116 und

q eine Zahl von 2 bis 85

bedeuten.

**8.** Katalysatorzusammensetzung nach Anspruch 7, worin m eine Zahl von 1,5 bis 5, p eine Zahl von 6 bis 14 und q eine Zahl von 3 bis 10 bedeuten.

**9.** Katalysatorzusammensetzung nach einem der vorstehenden Ansprüche, wofür nach der Stufe (A), aber vor der Stufe (C), die folgende Stufe

(B1)   teilweises Aktivieren des Katalysatorvorläufers mit Diethylaluminiumchlorid und Tri-n-hexylaluminium

durchgeführt wird.

**10.** Verfahren zur Olefinpolymerisation, bei dem mindestens ein $C_2$- bis $C_{10}$-$\alpha$-Olefin unter Olefinpolymerisationsbedingungen in Gegenwart einer Katalysatorzusammensetzung polymerisiert wird, die durch

(A) Kontaktieren einer Lösung einer Magnesiumverbindung in einer Elektronendonorverbindung mit einer Titanverbindung,

(B) Kontaktieren der aus der Stufe (A) resultierenden Lösung mit einem festen inerten porösen Träger zur Bildung eines Katalysatorvorläufers und

(C) Kontaktieren des Vorläufers mit Dimethylaluminiumchlorid

hergestellt worden ist.

**11.** Verfahren nach Anspruch 10, worin die $\alpha$-Olefin-Beschickung ein Gemisch aus Ethylen und mindestens einem $C_3$- bis $C_{10}$-$\alpha$-Olefin ist.

**Revendications**

**1.** Une composition catalytique de polymérisation d'oléfine obtenue par :

(a) la mise en contact d'une solution d'un dérivé de magnésium dans un composé électro-donneur avec un dérivé de titane;
(b) la mise en contact de la solution obtenue dans l'étape (A) avec un support poreux, inerte et solide pour former un précurseur de catalyseur; et
(c) la mise en contact du précurseur avec du chlorure de diméthyl aluminium.

**2.** Une composition catalytique selon la revendication 1, dans laquelle le dérivé de magnésium répond à la formule :

$$MgX_2$$

dans laquelle :
X représente un atome de Cl, Br ou I ou leurs mélanges.

**3.** Une composition catalytique selon la revendication 1 ou 2, dans laquelle le dérivé électro-donneur comprend au moins une base de Lewis.

**4.** Une composition catalytique selon la revendication 3, dans laquelle la base de Lewis comprend un éther aliphatique et/ou un ether cyclique.

**5.** Une composition catalytique selon l'une quelconque des revendications précédentes, dans laquelle le dérivé de titane répond à la formule :

$$Ti(OR)_aX_b$$

dans laquelle :

R représente un groupe hydrocarbyle aliphatique ou aromatique comportant 1 à 14 atomes de carbone ou COR' où R' est un groupe hydrocarbyle aliphatique ou aromatique comportant 1 à 14 atomes de carbone;
X représente un atome de Cl, Br ou I ou leurs mélanges.
a est un nombre de 0, 1 ou 2;

b est un nombre de 1 à 4; et

a + b = 3 ou 4.

6. Une composition catalytique selon la revendication 5, dans laquelle le dérivé de titane est $TiCl_3$, $TiCl_4$, $Ti(OCH_3)Cl_3$, $Ti(OC_6H_5)Cl_3$, $Ti(OCOCH_3)Cl_3$ ou $Ti(OCOC_6H_5)Cl_3$.

7. Une composition catalytique selon l'une quelconque des revendications précédentes, répondante à la formule :

$$Mg_m Ti(OR)_n X_p [ED]_q$$

dans laquelle :

R représente un groupe hydrocarbyle aliphatique ou aromatique comportant 1 à 14 atomes de carbone ou COR' où R' représente un groupe hydrocarbyle aliphatique ou aromatique comportant 1 à 14 atomes de carbone;

X représente un atome de Cl, Br ou I ou leurs mélanges.

ED représente un composé électro-donneur;

m est un nombre de 0,5 à 56;

n est un nombre égale à 0, 1 ou 2;

p est un nombre de 2 à 116; et

q est un nombre de 2 à 85.

8. Une composition catalytique selon la revendication 7, dans laquelle m est un nombre de 1,5 à 5, p est un nombre de 6 à 14 et q est un nombre de 3 à 10.

9. Une composition catalytique selon l'une quelconque des revendications précédentes, dans laquelle après ladite étape (A), avant ladite étape (C), on effectue l'étape suivante :

(B1) l'activation partielle du précurseur catalytique à l'aide de chlorure de diéthylaluminium et de tri-n-héxylaluminium.

10. Un procédé de polymérisation comprenant la polymérisation d'au moins une alpha-oléfine en $C_2$ à $C_{10}$ dans des conditions de polymérisation des oléfines, en présence d'une composition catalytique préparée par :

(A) la mise en contact d'une solution d'un dérivé de magnésium dans un composé électro-donneur avec un dérivé de titane;

(B) la mise en contact de la solution obtenue dans l'étape (A) avec un support poreux, inerte et solide pour former un précurseur de catalyseur;

(C) la mise en contact du précurseur avec le chlorure de diméthylaluminium.

11. Un procédé selon la revendication 10, dans lequel la charge d'alpha-oléfine est un mélange d'éthylène et d'au moins une alpha-oléfine en $C_3$ à $C_{10}$.

Hexene content in ethylene-hexene copolymers, mol.%.

● Copolymers prepared in the slurry with DMAC activated precursor of Example 1.

O Copolymers prepared in the gas phase with DMAC activated precursor of Example 1.